# EUROPEAN PATENT APPLICATION

(11) **EP 2 559 566 A2**
(43) Date of publication of application: **20.02.2013**
(21) Application number: 12005912.6
(22) Date of filing: 16.08.2012
(51) Int. Cl.: B60B 21/10

(54) **Bycicle rim with integral impact resistant structure and methods of making**

(30) Priority: 18.08.2011 US 201113212388
(71) Applicant: SRAM, LLC, Chicago, IL 60642 (US)
(72) Inventor: Poertner, Josh, 46208 Indianapolis (US); Hall, Michael, 46033 Carmel (DE); Morse, David, 46220 Indianapolis (US)
(74) Representative: Thum, Bernhard

(57) **Abstract**

A FRP rim for a bicycle, including a radially outer tire-engaging portion and a radially inner spoke-engaging portion. A first sidewall is in a spaced configuration with a second sidewall. The first and second sidewalls extend between the radially outer tire-engaging portion and the radially inner spoke-engaging portion and one or more integral bumper is located on an outermost radial extent or peak portion of the radially outer tire-engaging portion.

## Description

### Background of the invention

This present invention relates to bicycle rims, and more particularly, to a bicycle rim having an integral impact resistant structure and methods of manufacturing the bicycle rim.

Bicycle rims are manufactured from a variety of materials. For example, rims have historically been made of wood, metal (e.g., steel and aluminum alloys), and more recently of composite materials like carbon fiber reinforced materials and the like. Often, composite rim materials are referred to generically as fiber-reinforced plastic or fiber-reinforced polymer (FRP).

Most bicycle rims fall within two main groups, categorized by the type of tire for which they are designed. One common type of rim is referred to as a clincher rim, which is used with a clincher or tubeless tire. Clincher and tubeless tires typically have a wire or aramid (Kevlar) fiber bead that interlocks with sidewall flanges in the rim. A separate airtight inner tube partly enclosed by the rim and partly by the tire supports the tire carcass and maintains the locking connection of the bead with the flange. If the inner part of the rim where the inner tube fits has spoke holes, they must be covered by a rim tape, usually rubber, cloth, or tough plastic, to protect the inner tube from the ends of the spokes and the edges of the spoke holes. An advantage of this system is that the inner tube can be easily accessed in the case of a leak to be patched or replaced.

A second type of rim is referred to as a tubular or sew-up rim. These rims are designed for tubular tires which are torus shaped and attached to the rim with adhesive. In a tubular tire, the inner tube is fully enclosed within the circular tire carcass. The rim provides a shallow circular outer cross section in which the tire lies instead of flanges on which tire beads seat.

An unfortunate trait shared by both clincher rims and tubular rims is the potential of the rim to produce "pinch flats" or "snake-bite flats." A pinch flat is a hole in an inner tube caused by getting the tube pinched between the rim and a hard, sharp object, such as a rock, curbstone or the edge of a pothole.

In addition, when a tire is unable, due to impact severity or under inflation for example, to cushion a rim from impact, rim damage also may occur, causing the rim to bend or break, loosening spokes, and possibly causing a dangerous failure of the entire wheel.

There is a demand, therefore, to provide a bicycle rim with the capability of avoiding or minimizing pinch flats and rim damage. The invention satisfies the demand with minimal effect on rim weight and tire mounting effort.

### Summary of the invention

A FRP rim for a bicycle, including a radially outer tire-engaging portion and a radially inner spoke-engaging portion. A first sidewall is in a spaced configuration with a second sidewall. The first and second sidewalls extend between the radially outer tire-engaging portion and the radially inner spoke-engaging portion and at least one integral bumper is located on an outermost radial extent or peak portion of the radially outer tire-engaging portion.

These and other features and advantages of the present invention will be more fully understood from the following description of one or more embodiments of the invention, taken together with the accompanying drawings.

### Brief description of the drawings

In the drawings:
- FIG. 1: shows a cross sectional view of a clincher style rim with integral bumper according to the invention;
- FIG. 2: shows a close up of the rim of FIG. 1;
- FIG. 3: shows a cross sectional view of a tubular style rim with integral bumper according to the invention;
- FIG. 4: shows a close of the rim of FIG. 3;
- FIG. 5: shows a process of making the rim with integral bumper according to the invention;
- FIG. 6: shows a different process than that shown in FIG. 5 of making the rim with integral bumper according to the invention; and
- FIG. 7: shows another process than that of FIGS. 5 and 6 of making the rim with integral bumper according to the invention.

### Detailed description of the preferred embodiments

Preferred embodiments of the invention will herein be described with reference to the drawings. It will be understood that the drawings and descriptions set out herein are provided for illustration only and do not limit the invention as defined by the claims appended hereto and any and all their equivalents.

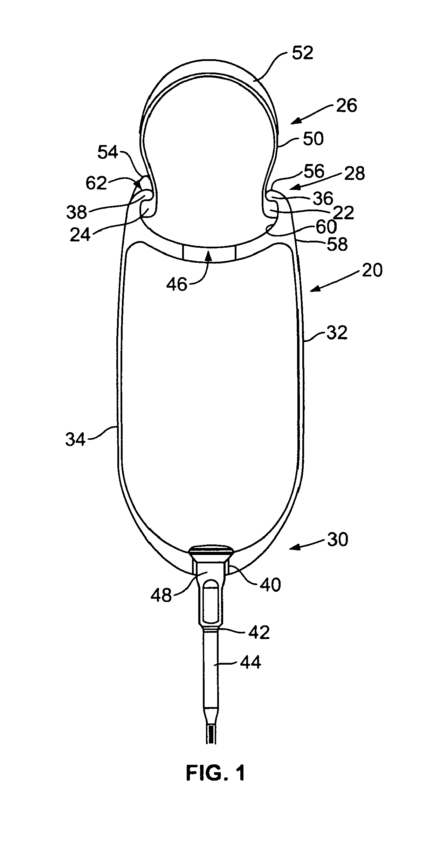

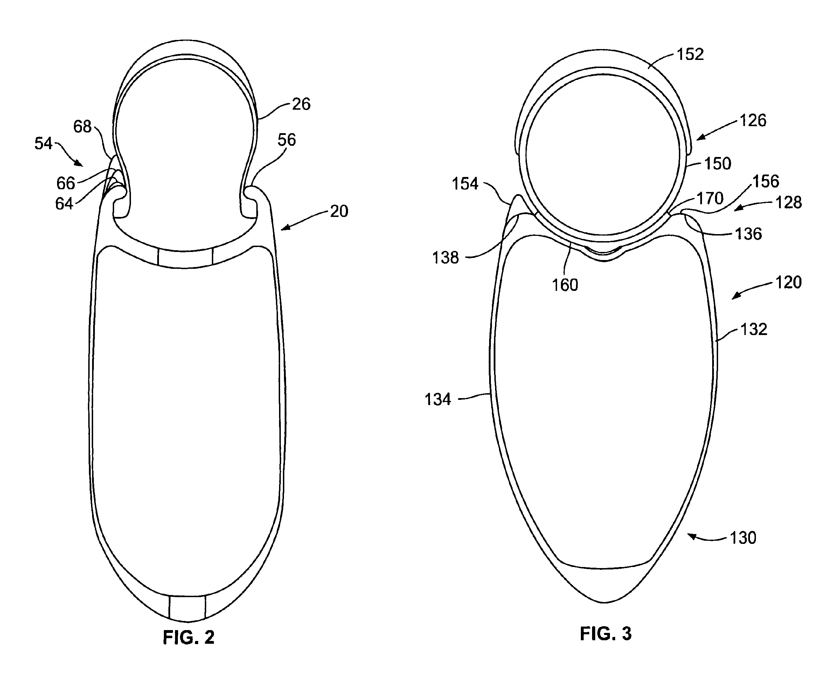

FIGS. 1 and 2 show a clincher rim 20, wherein beads 22, 24 of a clincher-type tire 26 are held onto the rim. The rim 20 generally includes a radially outer tire-engaging portion 28, a radially inner spoke-engaging portion 30, a first sidewall 32 and a second sidewall 34 spaced apart from the first sidewall. The first and second sidewalls 32, 34 extend between the tire-engaging and spoke-engaging portion 28, 30 to generally form the shape of the rim 20.

The tire-engaging portion 28 includes a pair of circumferential bead engaging members 36, 38 for engaging the beads 22, 24 of the tire 26. It will be understood that the configuration of the circumferential bead engaging members 36, 38 may include straight sidewalls, sidewalls with a hook member as shown or any configuration adapted to engage beads of conventional clincher tires. The tire 26 shown is a conventional clincher tire for purposes of supplying environment only, wherein the tire has a carcass 50 and an attached rubber tread 52. Typically, the tread 52 extends about the tire to form sidewalls as well as the part of the tire that contacts the riding surface, in a well-known manner.

The spoke-engaging portion 30 includes openings, one of which is shown at 40, for receiving a threaded end 42 of a spoke 44 therethrough. The tire-engaging portion 28 includes second openings, one of which is shown at 46, each of the second openings aligned with a respective one of the first spoke openings 40 for receiving a tool (not shown) to tighten a nipple 48 on the threaded end 42 of the spoke 44, in order to secure the spoke to the rim 20. The tire-engaging and spoke-engaging portions 28, 30 and first and second sidewalls 32, 34 may form a toroid, or any other suitable rim shape.

The bead engaging members 36, 38 are formed at or near the outermost extent of the tire engaging portion 28 of the rim 20, and each, in this example, can be considered essentially as radial flanges extending from sidewalls 32, 34. At the outermost radial extent or periphery of the bead engaging members 36, 38, essentially at the outermost radial extent of the rim, there is a pair of bumpers 54. Specifically, it is preferred that the bumpers 54 are located at the tops or peak portions 56 of the clincher bead engaging members 36, 38. Each of the pair of bumpers 54 may be positioned on or near a respective one of the bead engaging members 36, 38 and preferably on the peak portion 56. Preferably, the bumper 54 is formed as a part of the rim 20 or in other words, integral with the rim (i.e., non-detachable therefrom). In FIG. 1, the left side of the drawing shows bumper 54, while the right side omits the bumper.

The bumpers 54 are preferably formed of an elastomeric material capable of permanently and tenaciously bonding to the material of the rim 20. In the illustrated embodiment, the rim 20 may be considered to be made of FRP, and thus the bumper 54 would be made of a material which bonds to the FRP. Alternately, the rim 20 can be made of or include a portion that is a non-FRP material, like a metal alloy, and accordingly the bumper 54 would be made of a material which bonds to the alloy. In a preferred embodiment, the bumper 54 is made of an elastomeric material which bonds to a carbon fiber FRP material. In a more preferred embodiment, the bumper 54 is made of a resilient elastomeric material which permanently bonds to a carbon fiber FRP material and has a Shore A hardness, when cured, from a hardness value of about 40 to about 80. More preferably, the Shore A hardness is about 75. In one example, the material is a Tetrafluoroethylene and Propylene Copolymer.

The size of each bumper 54 may be between about 0.75 and 3.5 mm tall, as measured in the radial direction. It is believed that if the bumper 54 is less than about 0.75 mm, there is diminishing or no beneficial effect with respect to impact protection and reduction of pinch flats. If the bumper 54 is taller than about 3.5 mm, the ability of mounting a tire becomes more difficult. The width of the bumper 54 at the base is preferably about 3-6mm, which may depend on rim type and the height of bumper.

The cross-sectional shape of each bumper 54 may be triangular, conoid, conoidal, extending, mounded, parabolic, ogive, conical, rounded, frustoconical or any similar shape. Preferably, the bumper 54 forms a shape that is both tangential to the rim brake surface 58 as well as to inner tire mounting surface 60. Also, the bumper 54 may have smooth edges, which is believed to be more aerodynamic as well as structurally sound. Furthermore, the bumpers may be shaped and sized to conform closely at an inner side thereof to the outer contour or shape of the tire with which the rim is intended to be used. The inner surface, i.e., the base 62 of the bumper 54 may be rounded to allow the material of the rim to lie as smoothly as possible over the largest possible radius and conform to the top 56 of the bead engaging member 38 of the rim 20. As a general rule, the tighter the radius of the rim top part 56, the higher the likelihood of impact damage to the rim in the event of an impact, and the lower the allowable wall thickness, which reduces the strength of the rim, especially at or near the outer tire engaging portion 28. Thus, a smoothly rounded profile at the peaks 56 is preferred, for best results.

FIG. 2 shows several different sizes and variations of shape of the bumper 54. As in the clincher rim shown in FIG. 1, rim 20 includes a tire 26 attached thereto. A bumper 54 is attached to the top 56 of the bead engaging member of the rim 20 on the left side. For comparison, the right side top 56 of the bead engaging member is shown without a bumper. A first example of a bumper, shown at 64, is about 1mm in height and has a generally rounded shape. A second example of a bumper, shown at 66, is about 2mm in height and has a generally domed or conical shape. The second bumper 66 might be thought of as the combined shape and size of the first and second bumper profiles. A third bumper, shown at 68, is about 3mm in height and has a generally parabolic or conoid shape. The third bumper 68 might be thought of as the combined shape and size of the first, second and third bumper profiles.

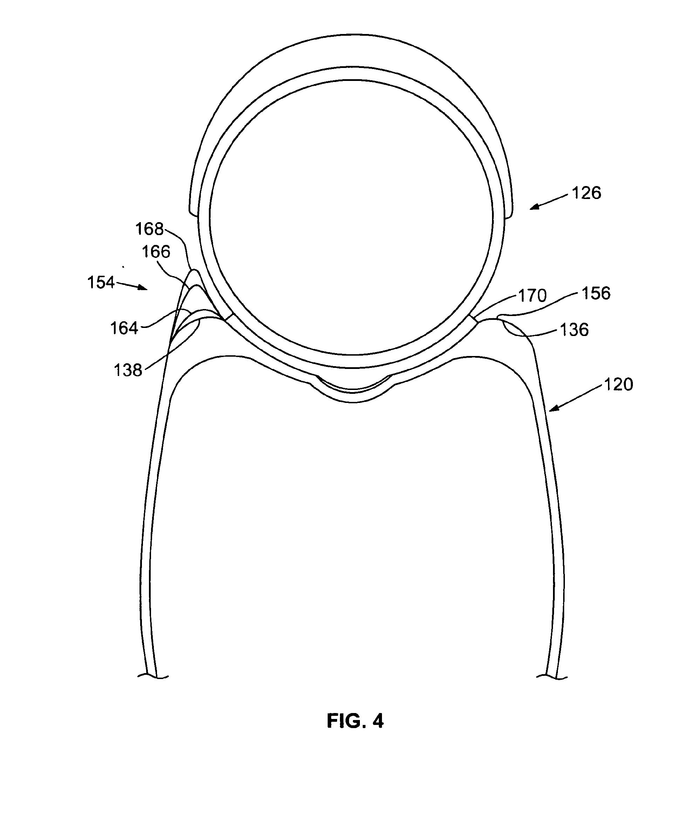

FIGS. 3 and 4 illustrate a tubular or sew-up type rim 120 wherein the tire 126 is glued to the rim with conventional tire glue, generally represented at 170 at the tire mounting surface 160. The rim 120 generally includes a radially outer tire-engaging portion 128, a radially inner spoke-engaging portion 130, a first sidewall 132 and a second sidewall 134 spaced apart from the first sidewall. The first and second sidewalls 132, 134 extend between the tire-engaging 128 and spoke-engaging portion 130. The tire-engaging and spoke-engaging portions 128, 130 and first and second sidewalls 132, 134 generally form a closed shape, which in the illustrated example together form a toroid. It will be understood that tubular rims are available in a wide range of cross-sectional shapes and any and all are contemplated by the invention.

The tire-engaging portion 128 includes a pair of circumferential tops 136, 138, in the same general position from which the beads engaging portions of a clincher rim would be formed, and a bed 160 for engaging the tire 126. The tire 126 shown is a conventional tubular or sew-up tire, having a carcass 150 and an attached rubber tread 152, which is shown to provide environment. Typically, the tread 152 extends about the tire to form sidewalls as well as the part of the tire that contacts the riding surface, in a well-known manner. The spoke-engaging portion 130 includes openings (not shown), for receiving spokes (not shown) as is well known, as well as access openings in the bed 160 of the rim (not shown).

The tops 136, 138 are formed at or near the outermost extent of the tire engaging portion 128 of the rim 120, and each can be considered essentially as radial top positions or peaks 156 at the ends of sidewalls 132, 134. At the outermost radial extent or periphery of the tops 136, 138, essentially at the outermost radial extent of the rim at peaks 156, there is a pair of bumpers 154, with one bumper located on or near each of the peaks. Preferably, the bumper 154 is formed as a permanent part of the rim 20 or in other words, integral or unitary with the rim (i.e., non-detachable therefrom). In FIG. 3, the left side of the drawing shows bumper 154, while the right side omits the bumper.

The bumpers 154 are preferably formed of an elastomeric material capable of permanently and tenaciously bonding to the material of the rim 120 as detailed in the above examples. It will be understood that the exact formulation of bumper material will preferably be matched to the substrate rim material, whether the substrate rim material is metallic, FRP, and so on.

The cross sectional shape of each bumper 154 may be triangular, conoid, conoidal, extending, mounded, parabolic, ogive, conical, rounded, frustoconical or any similar shape as detailed in the above examples.

FIG. 4 shows several different sizes and variations of shape of the bumper 154. As in the clincher rim shown in FIG. 3, rim 120 includes a tire 126 attached thereto. A bumper 154 is attached to the top of the peak 156 of the rim 120. For comparison, the right side top or peak part 156 is shown without a bumper. A first example of a bumper, shown at 164, is about 1mm in height and has a generally rounded shape. A second example of a bumper, shown at 166, is about 2mm in height and has a generally domed or conical shape. The second bumper 166 might be thought of as the combined shape and size of the first and second bumper profiles. A third bumper, shown at 168, is about 3mm in height and has a generally parabolic or conoid shape. The third bumper 168 might be thought of as the total combined shape and size of the first, second and third bumper profiles. The exact shape of the bumpers shown herein should not be considered limiting, but illustrative examples thereof.

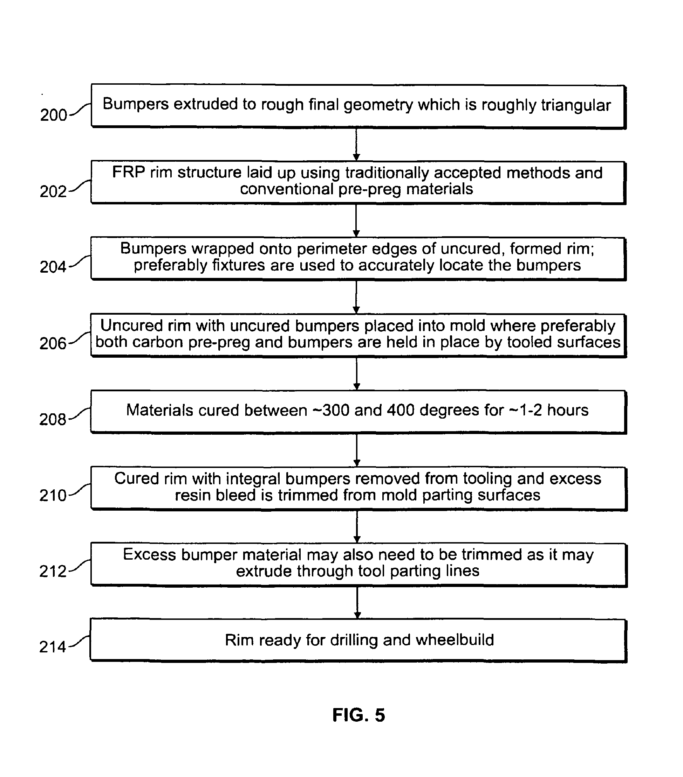

A process of making a rim according to the invention with integral bumper is shown in FIG. 5, with some examples of the resulting rims being shown in FIGS. 1-4. The process may be generally referred to as "co-molding" or "comolding," which is a process for making, for example, plastic parts. In step 200, and referring to the elements described in detail above, bumpers are extruded to a rough final geometry which is roughly triangular and as described above. In step 202, a carbon (or FRP) rim structure is laid up using traditionally accepted methods and conventional pre-preg materials. In step 204, the bumpers are wrapped onto perimeter edges of an uncured, formed rim, and preferably fixtures are used to accurately locate the bumpers. In step 206, the uncured rim with uncured bumpers is placed into molds where both carbon (FRP) pre-preg and bumpers are preferably held in place by tooled surfaces. In step 208, the uncured rim and bumper materials are cured between about 300 and 400 degrees for about 1-2 hours. In step 210, the cured rim with now integral bumpers are removed from tooling and excess resin bleed is trimmed from mold parting surfaces. In step 212, excess bumper material may also need to be trimmed as it may extrude through tool parting lines. In step 214, the rim is ready for drilling and assembly into a wheel as is well known by adding conventional wheel building parts and performing conventional wheel building steps.

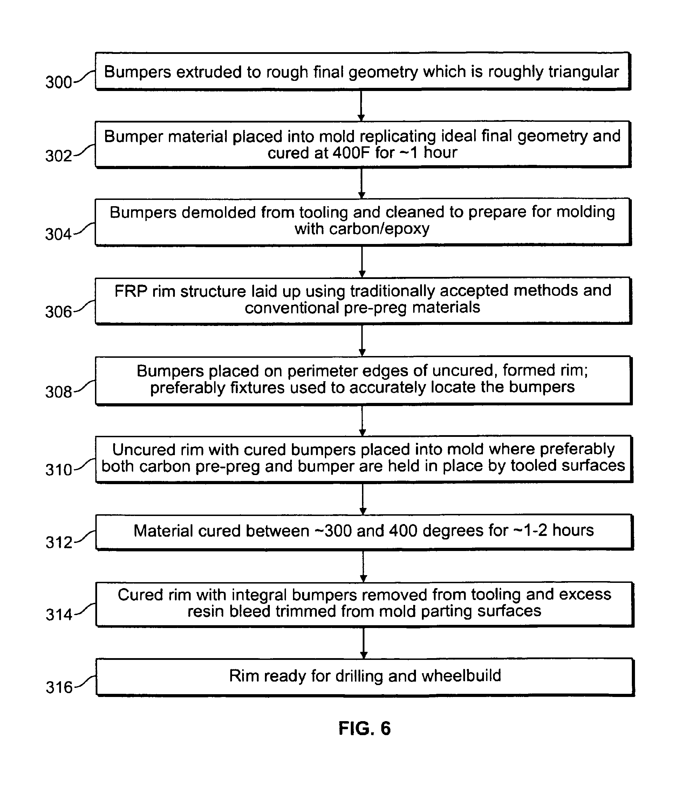

A process of making a rim according to the invention with integral bumper is shown in FIG. 6, with some examples of the resulting rims being shown in FIGS. 1-4. The process may be generally referred to as "insert molding," which generally is a well-known process. In step 300 of the process bumpers are extruded to a rough final geometry which is roughly triangular and as described above. In step 302, the bumpers are placed into a mold that is shaped and sized to replicate the desired final geometry and cured at about 400 degrees F for about one (1) hour. In step 304, the bumpers are demolded from tooling and cleaned to prepare for molding with carbon/epoxy or a suitable FRP material. In step 306, a carbon or FRP rim structure is laid up using traditionally accepted methods and conventional pre-preg materials. In step 308, bumpers are placed on perimeter edges of the uncured, formed rim, and preferably fixtures are used to accurately locate the bumpers. In step 310, the uncured rim with cured bumpers is placed into a mold where preferably both carbon pre-preg and bumpers are held in place by tooled surfaces. In step 312, the rim and bumper materials are cured between about 300 and 400 degrees for about 1-2 hours. In step 314, the cured rim with now integral bumpers is removed from tooling and excess resin bleed is trimmed from mold parting surfaces. In step 316, the rim is ready for drilling and wheelbuilding as is well known.

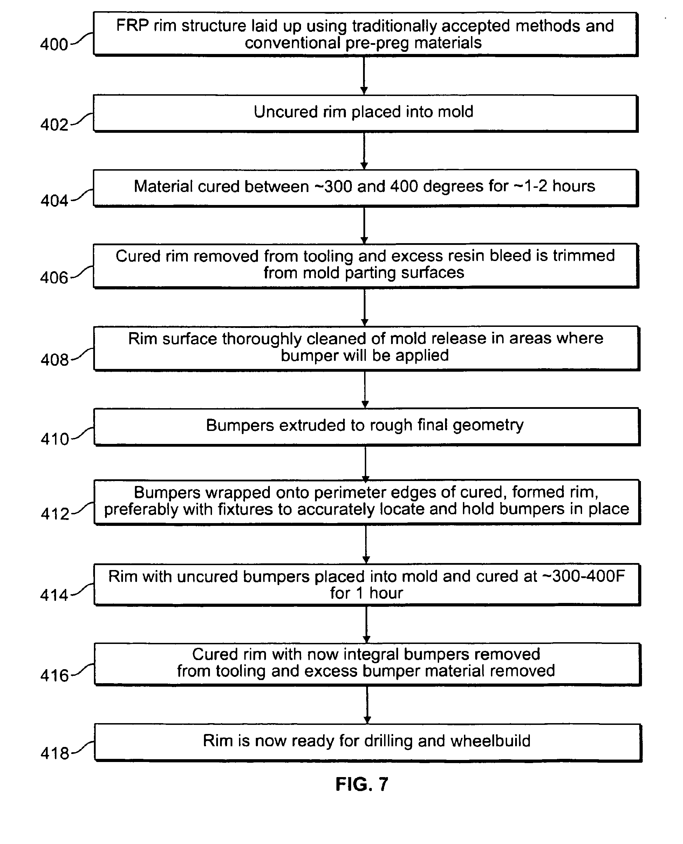

A process of making a rim according to the invention with integral bumper is shown in FIG. 7, some examples of which are shown in FIGS. 1-4. The process may be generally referred to as "overmolding," which is generally a well-known process. In step 400, a carbon or FRP rim structure is laid up using traditionally accepted methods and conventional pre-preg materials. In step 402, an uncured rim is placed into a mold of preferably carbon pre-preg or another FRP material. In step 404, the material is cured between about 300 and 400 degrees for about 1-2 hours. In step 406, the cured rim is removed from tooling and excess resin bleed is trimmed from mold parting surfaces. In step 408, the rim surface is thoroughly cleaned of mold release in areas where the bumper will be located and affixed. In step 410, the bumper material is extruded to roughly final geometry which is roughly triangular as discussed in detail above. In step 412, a pair of bumpers is wrapped onto the perimeter edges of a cured, formed rim, and preferably fixtures are used to accurately locate and hold the uncured bumpers in place. In step 414, the rim with uncured bumpers is placed into a mold and cured at about 300-400F for about one hour. In step 416, the cured rim with now integral bumpers is removed from tooling and excess fluorocarbon material may be removed. In step 418, the rim is now ready for drilling and wheel building as is well known.

The flex and curvature of the bumpers shown in FIGS. 3 and 4 makes installing tubular tires over the tops of the bumpers surprisingly easy. For the clincher rim example, it has been found that making the tire bed slightly deeper permits the tire to install more easily as the tire can move radially inward on the side opposite of where one is positioning the bead. The bumpers on clincher rims also increase apparent tire blowoff pressure. It is believed that this is likely due to the increased friction between bumper and tire carcass, but also likely because it reduces deflection of the casing for a given pressure. It is believed that the bumpers will reduce rim and tire damage to a clincher style rim that would be caused by riding on a flat tire.

The invention also provides increased pinch-flat resistance and reduced lateral tire squirm which allows a rider to ride at a lower tire pressure without being penalized by impact damage, pinch flatting, or vague cornering caused by excess tire casing flex and this is a considerable benefit that only comes when the bumpers are integral and structural. If the same or similar structures were instead held on in grooves or by some other non-integral means it is believed that it cannot offer structural support to the tire casing to reduce flex.

It has been shown that a 1 mm bumper provides significant impact resistance resulting in a reduction of rim damage and failure on the order of about a 10% improvement in sharp edge impact. Also a 1mm bumper provides significant puncture resistance on the order of about a 20% increased resistance to pinch-flatting when impacted with a round impact head. Also a reduction in tire squirm has been noted from a reduced lateral tire flex under cornering without risk to the tire sidewall. While deep tire wells have been tried in carbon rims in the past, the problem noted is that the tire casing becomes abraded by the hard rim edge, and pinch flatting is increased as the tire bottoms out on the rim in an area where the casing is thinnest, and this too are solved with a rim according the invention. A side benefit of using rims with bumpers according the invention is a measurable reduction of air drag due to the shape and size of the bumpers.

Furthermore, wheels for racing undergo a test protocol to ensure safety. In the test, the wheel is catastrophically failed in a very high energy impact and must fail 'safely'. Safely is currently defined as having no sharp edges upon failure, the rim remaining intact with itself, and the assembly remaining 'sufficiently bound' which means that the spokes remain attached to the rim as well as the hub. Rims constructed according to the invention have tested been tested and passes the test easily, because the bumpers tend to hold the rim together after failure and this makes passing the test much easier, the bumpers seem to completely eliminate the 'open' failure mode, which is defined as when the rim separates from itself in the impact zone. This is a significant advantage over a design where "wings" are simply detachably fit into grooves in the rim.

While this invention has been described by reference to a particular embodiment, it should be understood that numerous changes could be made within the spirit and scope of the inventive concepts described. Accordingly, it is intended that the invention not be limited to the disclosed embodiment, but that it have the full scope permitted by the language of the following claims.

## Claims

1. A rim for a bicycle, comprising:
a radially outer tire-engaging portion;
a radially inner spoke-engaging portion;
a first sidewall;
a second sidewall spaced apart from the first sidewall, the first and second sidewalls extending between the radially outer tire-engaging portion and the radially inner spoke-engaging portion; and
at least one integral bumper non-removably located on an outermost radial extent of the radially outer tire-engaging portion.

2. The rim according to claim 1, wherein the at least one bumper is between about 0.75 to about 3.5 mm in height.

3. The rim according to claim 1 or 2, wherein the at least one bumper is between about 3 to about 6 mm in width at a base thereof.

4. The rim according to one of claims 1 to 3, wherein the material of the at least one bumper has a Shore A hardness of about 50 to about 80 in a cured state, in particular a Shore A hardness of about 75 in a cured state.

5. The rim according to one of the preceding claims, wherein the material of the at least one bumper includes a Tetrafluoroethylene and Propylene Copolymer.

6. The rim according to one of the preceding claims, wherein the at least one bumper is triangular, conoid, conoidal, extending, mounded, parabolic, ogive, conical, rounded, or frustoconical.

7. The rim according to one of the preceding claims, wherein the at least one bumper is shaped and sized to conform closely at an inner side thereof to the outer shape of a tire mounted to the rim.

8. The rim according to one of the preceding claims, wherein the rim is a clincher rim.

9. The rim according to claim 8, wherein the clincher rim includes a pair of spaced bead engaging members located at the radially outermost extent of the rim.

10. The rim according to claim 3, wherein one of the at least one bumper is positioned at each of the pair of bead engaging members at a peak portion thereof.

11. The rim according to one of claims 1 to 7, wherein the rim is a tubular rim.

12. The rim according to claim 11, wherein the rim includes a pair of spaced peaks located at the outermost radial extent of the rim.

13. The rim according to claim 12, wherein one of the at least one bumper is positioned at each of the pair of spaced peaks.

14. The rim according to one of the preceding claims, wherein the rim is a carbon-fiber reinforced material or formed of a FRP material.

15. The rim according to one of the preceding claims, wherein the at least one bumper is co-molded, insert molded or overmolded onto the rim.
